# EUROPEAN PATENT SPECIFICATION

(11) **EP 2 554 307 B1**
(45) Date of publication and mention of the grant of the patent: **06.04.2016**
(21) Application number: 11800084.3
(22) Date of filing: 13.04.2011
(51) Int. Cl.: B23B 45/00, B23B 45/14, B25H 1/00

(54) **CORDLESS MAGNETIC BASE DRILL**
SCHNURLOSE BOHRER AUF MAGNETBASIS
PERCEUSE À BASE MAGNÉTIQUE SANS FIL

(30) Priority: 01.07.2010 CN 201010225147
(43) Date of publication of application: 06.02.2013
(73) Proprietor: Woelders, Niels Jacob, Shanghai 200072 (CN)
(72) Inventor: Woelders, Niels Jacob, Shanghai 200072 (CN)
(74) Representative: Henkel, Breuer & Partner
(86) International application number: PCT/CN2011/072737
(87) International publication number: WO 2012/000339

(56) References cited:
- EP-A1- 0 554 017
- EP-A2- 1 967 331
- CN-A- 101 346 204
- CN-A- 101 890 520
- CN-U- 201 783 669
- GB-A- 2 378 145
- GB-A- 2 451 566
- US-A- 2 977 825
- US-A- 5 126 643
- US-A- 5 984 020
- US-A1- 2005 025 586
- US-A1- 2008 056 833
- US-A1- 2009 028 653
- US-A1- 2010 021 249

## Description

### FIELD OF THE INVENTION

The invention relates to a cordless magnetic drill.

### BACKGROUND OF THE INVENTION

Magnetic drills have been widely used in various fields such as steel structure processing, shipbuilding, bridge engineering, petroleum engineering, power station maintenance and railway construction etc. So far, all magnetic drills on the market have cords, i.e. the magnetic drills have to be connected with external power sources by electric wires or have to be connected with air pumps by air hoses when in use to obtain the power required for running. Therefore, in the working environment of the magnetic drills extra space has to be provided for installing the external power sources, and electric wires or air hoses have to be set up between the working positions of the magnetic drills and the external power sources, as a result the safety of the magnetic drills cannot be guaranteed in a complex working environment. For example, when the magnetic drills are operated high above the ground, relatively longer electric wires or air hoses are needed because the external power sources cannot be easily reached at high heights, because of this the magnetic drills are inconvenient to use and are potentially dangerous whilst operation, furthermore when the magnetic drills are operated in a humid environment, the complex power supply lines of the magnetic drills can be hazardous whilst using the magnetic drills. Therefore, existing corded magnetic drills not only have great limitations, but are also not entirely safe.

US 2009/0028653 A1 discloses a magnetic drill that can be used as a cordless magnetic drill comprising: a control unit, a motor connected with said control unit, a magnetic base comprising permanent magnets, and a portable cordless power source connected with said control unit for supplying power to said motor, wherein said control unit is arranged to establish or cut off the connection between said power source and said motor.

US 5984020A discloses a power tool in the form of a hand-held power tool or in the form of a stationary power tool, such as a drill press. Both types of tools are operated by an AC power source and are not "cordless". In connection with the stationary power tool, an electromagnetic chuck or, alternatively, a permanent magnet or a vacuum pad or a clamp mechanism for securing the stationary power tool to a work piece or work bench is disclosed. The document states in the context of the description of the power source for the motor that the stationary power tool may include a battery power source but does not mention for which purpose the battery power source could be provided.

### SUMMARY OF THE INVENTION

The technical issues which the present invention addresses relate to convenience and safety, by providing a cordless magnetic drill which overcomes the challenges posed by a corded magnetic drill.

The present invention solves the technical issues above through a cordless magnetic drill comprising the features of claim 1. Preferred embodiments are defined in the dependent claims. The cordless magnetic drill comprises a control unit, a motor connected with the control unit, a gearbox connected with the motor for regulating the output speed of the motor, a portable cordless power source connected with the control unit for supplying power to the motor, and a magnetic base connected with the control unit, wherein the control unit is used for controlling the operation of the motor, the power source and the magnetic base, and establishing or cutting off the connection between the power source and the motor.

In the invention the magnetic base is an electromagnetic chuck, and the power source is further used for supplying power to the electromagnetic chuck.

In the invention, when the power source is nearly exhausted, the control unit is used for cutting off the connection between the power source and the motor, and/or warning.

Preferably, the control unit is used for cutting off the connection between the power source and the motor, reducing the working voltage of the electromagnetic chuck to the lowest voltage required for holding the cordless magnetic drill on the working surface, and/or warning when the power source is nearly exhausted.

Preferably, the cordless magnetic drill further comprises a power source controller connected with the power source for cutting off the power output of the power source when the power source is working abnormally, furthermore a protection module is designed in the control unit with the purpose of cutting off the connection between the power source and the motor before the power source controller responds, and/or warning when the power source is working abnormally.

Preferably, the cordless magnetic drill further comprises a power source controller connected with the power source and the control unit for obtaining the operation status of the power source and transmitting the operation status to the control unit, and the control unit is used for cutting off the connection between the power source and the motor, and/or warning according to the operation status when the power source is working abnormally.

Preferably, the cordless magnetic drill further comprises a backup power source connected with the control unit for supplying power to the electromagnetic chuck, and the control unit is used for controlling the backup power source to supply power to the electromagnetic chuck, and/or warning when the power source is working abnormally or its energy is exhausted.

Preferably, the control unit is used for controlling the backup power source to supply power to the electromagnetic chuck, cutting off the connection between the power source and the motor, and/or warning when the power source is working abnormally or its energy is exhausted.

Preferably, the power of the backup power source is supplemented by the power source through the control of the control unit.

Preferably, the backup power source is one of the following power sources or the combination of at least two of the following power sources: lithium-based batteries, nickel-cadmium batteries, nickel-metal hydride batteries, nickel-zinc batteries or fuel cells.

Preferably, the cordless magnetic drill further comprises a power source controller connected with the power source for cutting off the power output of the power source when the power source is working abnormally.

Preferably, the cordless magnetic drill further comprises a power source controller connected with the power source and the control unit for obtaining the operation status of the power source and transmitting the operation status to the control unit, and the control unit is used for cutting off the connection between the power source and the motor, and/or warning according to the operation status when the power source is working abnormally.

Preferably, the cordless magnetic drill further comprises a power source sensor connected with the power source and the control unit for obtaining the operation status of the power source and transmitting the operation status to the control unit, and the control unit is used for cutting off the connection between the power source and the motor, and/or warning according to the operation status when the power source is working abnormally.

Preferably, the cordless magnetic drill further comprises a magnetic field sensor connected with the control unit for obtaining the operation status of the magnetic base and transmitting the operation status to the control unit, and the control unit is used for stopping establishing the connection between the power source and the motor or cutting off the connection between the power source and the motor, and/or warning according to the operation status when the magnetic field of the magnetic base is insufficient.

Preferably, the cordless magnetic drill further comprises a mechanical safety device used for fixing the cordless magnetic drill on a working surface.

Preferably, the power source is one of the following power sources or the combination of at least two of the following power sources: lithium-based batteries, nickel-cadmium batteries, nickel-metal hydride batteries, nickel-zinc batteries or fuel cells.

Preferably, the control unit has a man-machine interaction interface for inputting control instructions by an operator to the control unit and warning the operator when the cordless magnetic drill is working abnormally.

Preferably, the cordless magnetic drill comprises a permanent magnetic chuck, wherein the control unit is used for controlling the operation of the motor and the power source, and establishing or cutting off the connection between the power source and the motor.

Preferably, the cordless magnetic drill further comprises an electromagnetic chuck connected with the control unit, the control unit is further used for controlling the operation of the electromagnetic chuck, and the power source is further used for supplying power to the electromagnetic chuck.

Preferably, the cordless magnetic drill further comprises a magnetic field sensor connected with the control unit for obtaining the operation status of the permanent magnetic chuck and the electromagnetic chuck and transmitting the operation status to the control unit, and the control unit is used for stopping establishing the connection between the power source and the motor or cutting off the connection between the power source and the motor, and/or warning according to the operation status when the superposed magnetic field of the permanent magnetic chuck and the electromagnetic chuck is insufficient.

Preferably, the cordless magnetic drill further comprises a power source controller connected with the power source for cutting off the power output of the power source when the power source is working abnormally.

Preferably, the cordless magnetic drill further comprises a power source controller connected with the power source and the control unit for obtaining the operation status of the power source and transmitting the operation status to the control unit, and the control unit is used for cutting off the connection between the power source and the motor, and/or warning according to the operation status when the power source is working abnormally.

Preferably, the cordless magnetic drill further comprises a power source sensor connected with the power source and the control unit for obtaining the operation status of the power source and transmitting the operation status to the control unit, and the control unit is used for cutting off the connection between the power source and the motor, and/or warning according to the operation status when the power source is working abnormally.

Preferably, the cordless magnetic drill further comprises a mechanical safety device used for fixing the cordless magnetic drill on a working surface.

Preferably, the power source is one of the following power sources or the combination of at least two of the following power sources: lithium-based batteries, nickel-cadmium batteries, nickel-metal hydride batteries, nickel-zinc batteries or fuel cells.

Preferably, the control unit has a man-machine interaction interface for inputting control instructions by an operator to the control unit and warning the operator when the cordless magnetic drill is working abnormally.

The present invention has the following benefits: the cordless magnetic drill adopts a portable cordless power source, so that the arrangement of external power sources, electric wires or air hoses can be omitted. The existing corded structure of magnetic drills is improved to be a cordless structure, so that various defects of the existing corded magnetic drills are overcome, and the gap in the market is filled. The cordless magnetic drill of the present invention is no longer limited by the external power source when in use, so that on the one hand the use safety is improved and on the other hand the convenience of use is greatly improved as well. The cordless magnetic drill can be used for drilling work of various high difficulties at any operating location without being influenced by the operating environment, so that work efficiency is improved, and the working procedure is simplified. Furthermore, as the cordless magnetic drill adopts a portable cordless power source, in the event that said power source is exhausted or cut off because of the abnormal working of the cordless magnetic drill, the magnetic base will lose magnetic field because of power failure. In this situation, the cordless magnetic drill will slip off and could even fall from the working surface and cause danger. To prevent this, the present invention further improves the design of the magnetic base to guarantee that the cordless magnetic drill can be reliably and firmly held on the working surface by the magnetic base through various options to prevent the operator from suffering from unnecessary danger, as a result the operational safety of the cordless magnetic drill is further improved to a reliable level.

### BRIEF DESCRIPTION OF THE DRAWINGS

Fig. 1 is a structure diagram showing the cordless magnetic drill of the present invention.
Fig. 2 is a structure diagram showing the first embodiment of the cordless magnetic drill of the present invention.
Fig. 3 is a structure diagram showing an example of a cordless magnetic drill which is not part of the invention serving to explain certain features of the present invention.
Fig. 4 is a structure diagram showing another example of a cordless magnetic drill which is not pat of the invention serving to explain certain features of the present invention.
Fig. 5 is a structure diagram showing the second embodiment of the cordless magnetic drill of the present invention.

### DETAILED DESCRIPTION OF PREFERRED EMBODIMENTS

The preferable embodiments of the present invention are listed below with reference to the figures to describe the technical solutions of the present invention in details.

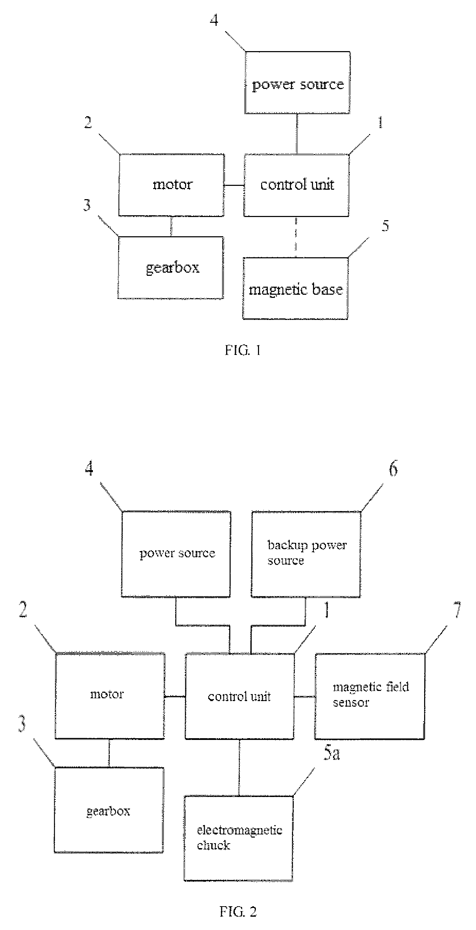

As shown in Fig. 1, the cordless magnetic drill in the embodiments comprises a control unit 1, a motor 2, a gearbox 3, a power source 4 and a magnetic base 5. The control unit 1 is a central control module of the cordless magnetic drill and used for uniformly controlling each necessary module and each optional module in the cordless magnetic drill according to the control instructions of an operator; the motor 2 is connected with the control unit 1 and taken as a rotation driving module for various drilling bits assembled on the cordless magnetic drill; the gearbox 3 is connected with the motor 2 and used for regulating the output rotation speed of the motor 2 to the appropriate rotation speed required by the actual work, so that the workpiece can be ideally processed by the drilling bits at the appropriate rotation speed; the power source 4 is connected with the control unit 1 and is a portable cordless power source used for supplying power to the motor 2, however, whether the actual connection is established between the power source 4 and the motor 2 is controlled by the control unit 1, and the control modes will be detailed in the following; the magnetic base 5 is used for reliably holding the cordless 7 magnetic drill on a working surface by the magnetic field thereof. The magnetic base 5 can be an electromagnetic chuck, an electro-permanent magnetic chuck, a permanent magnetic chuck or the combination of a permanent magnetic chuck and an electromagnetic chuck. When the magnetic base 5 is under the condition of being either an electromagnetic chuck or an electro-permanent magnetic chuck, it will be connected with the control unit 1. However, when the magnetic base 5 is under the condition of being a permanent magnetic chuck, it will not be connected with the control unit 1. When the magnetic base 5 is under the condition of being a combination of a permanent magnetic chuck and an electromagnetic chuck, the electromagnetic chuck will be connected with the control unit 1 whilst the permanent magnetic chuck will not be connected with the control unit 1. The different circumstances above will be detailed with reference to each embodiment. The control unit 1 further can comprise a man-machine interaction interface such as several simple switches for the operator to control the cordless magnetic drill and several simple indicator lights for indicating the operation status of the cordless magnetic drill; or the man-machine interaction interface further can be a control panel which is more complex, whereby the control panel can even comprise a real-time display to display the operation status of the cordless magnetic drill, so that the operator can monitor the operation status and can input control instructions to the control unit 1 through the control panel to control the operation of the cordless magnetic drill, and particularly, the control unit 1 further can have an alarm function to be capable of timely sending a warning to the operator through the man-machine interaction interface when the cordless magnetic drill is working abnormally.

### Embodiment 1

As shown in Fig. 2, in the embodiment, the magnetic base 5 adopts an electromagnetic chuck 5a and the power source 4 supplies power to the electromagnetic chuck 5a for generating the magnetic field. The control unit 1 respectively establishes and cuts off the connection between the power source 4 and the electromagnetic chuck 5a to generate or eliminate the magnetic field of the electromagnetic chuck 5a when the cordless magnetic drill starts working and finishes working, and the power source 4 constantly keeps the connection with the electromagnetic chuck 5a to guarantee that the cordless magnetic drill is reliably held on the working surface when the cordless magnetic drill is working.

When the energy of the power source 4 is nearly exhausted, in order to prevent the cordless magnetic drill from slipping off and even falling off from the working surface caused by the loss of the holding force as the electromagnetic chuck 5a suddenly powers off, the control unit 1 can precut off the connection between the power source 4 and the motor 2 before the power of the power source 4 is thoroughly exhausted by the motor 2, so that the electromagnetic chuck 5a can still work due to the residual power of the power source 4, or the control unit 1 even can reduce the working voltage of the electromagnetic chuck 5a as long as the holding force is sufficient enough to keep the cordless magnetic drill on the working surface, so that the energy consumption of the electromagnetic chuck 5a is reduced, and the magnetic field thereof can last longer. Alternatively the control unit 1 can send a warning through the man-machine interaction interface to prompt the operator that the energy of the power source 4 is not sufficient enough, so that the operator can timely move the cordless magnetic drill to a safe position where falling can be avoid and the power source 4 can be replaced or charged. Alternatively, the control unit 1 can cut off the connection between the power source 4 and the motor 2 while sending a warning through the man-machine interaction interface.

In the embodiment, the portable cordless power source 4 can adopt various lithium-based batteries such as lithium-ion batteries, lithium iron phosphate batteries etc; fuel cells; various chemical batteries such as nickel-cadmium batteries, nickel-metal hydride batteries, nickel-zinc batteries etc; and other various mobile power sources. For some power sources, in order to guarantee their safety or lifetime etc, various protection measures such as overload protection, low-voltage protection, overheating protection and so on are needed, therefore a power source controller or a power source sensor (which is not shown in the Fig. 1) can be additionally designed for the power source 4 as required when the power source 4 of the present invention adopts the power sources which are in need of protection. The circumstances of the additional design of the two modules will be respectively detailed in the following.

When the power source controller is adopted, the power source controller can automatically protect the power source 4 according to the operation status of the power source 4. Because the protection action can suddenly cut off all the power output of the power source 4 and the power failure can cause the loss of the holding force of the electromagnetic chuck 5a and further cause the slipping off or falling off of the cordless magnetic drill from the working surface, for safety reasons, the control unit 1 has to respond to the abnormal status of the power source 4 before all the power output of the power source 4 is cut off by the power source controller under the condition that the power source controller is installed. For example, the control unit 1 cuts off the connection between the power source 4 and the motor 2 to prevent all the power output of power source 4 from being cut off because the power source 4 reaches the protecting threshold value of the power source controller, so that enough power remains for the electromagnetic chuck 5a to be capable of continuously sticking on the working surface and enough processing time is supplied to the operator and the abnormal status of the power source 4 can even be directly eliminated because the load of the power source 4 is reduced due to the connection between the power source 4 and the motor 2 being cut off; alternatively the control unit 1 warns through the man-machine interaction interface to prompt the operator to timely process the abnormal status of the power source 4; alternatively the control unit 1 cuts off the connection between the power source 4 and the motor 2 whilst simultaneously sending out a warning. Specifically, for example, when the overload protection is performed by the power source controller to the power source 4, an overload protection module needs to be correspondingly designed in the control unit, furthermore, the preset overload protection current threshold value of the overload protection module should be lower than that of the power source controller, and the response time of the protection action from the overload protection module to the overload state should also be less than that of the protection action from the power source controller, so that the control unit 1 can cut off the connection between the power source 4 and the motor 2 and/or transmit an overload warning to the operator through the man-machine interaction interface before the protection action is performed by the power source controller when the power source 4 is overloaded; when the low-voltage protection is preformed by the power source controller to the power source 4, a low-voltage protection module needs to be correspondingly designed in the control unit, furthermore, the preset low-voltage protection voltage threshold value of the low-voltage protection module should be higher than that of the power source controller and the response time of the protection action from the low-voltage protection module to the low-voltage state also should be less than that of the protection action from the power source controller, so that the control unit 1 can cut off the connection between the power source 4 and the motor 2 and/or transmit a low-voltage warning to the operator through the man-machine interaction interface before the protection action is performed by the power source controller when the voltage of the power source 4 is too low; and when the overheating protection is preformed by the power source controller to the power source 4, an overheating protection module needs to be correspondingly designed in the control unit, furthermore, the preset overheating protection temperature threshold value of the overheating protection module should be lower than that of the power source controller, and the response time of the protection action from the overheating protection module to the overheating state should also be less than that of the protection action from the power source controller, so that the control unit 1 can cut off the connection between the power source 4 and the motor 2 and/or transmit an overheating warning to the operator through the man-machine interaction interface before the protection action is performed by the power source controller when the power source 4 is overheating.

When the power source sensor is adopted, the power source sensor is connected with the power source 4 and the control unit 1 in order to detect and obtain the operation status of the power source 4 and transmit the operation status data to the control unit 1 to be processed, and the control unit 1 can judge the operation status data to be capable of timely cutting off the connection between the power source 4 and the motor 2 when the power source 4 suffers from various abnormal conditions such as overload, low-voltage, overheating and so on to protect the power source 4, and/or can warn the operator through the man-machine interaction interface; and when the protection actions are performed, the electromagnetic chuck 5a still can stick on the working surface, so that enough processing time can be offered to the operator, and accidents caused by the cordless magnetic drill suddenly slipping off or falling off from the working surface can be avoided. Furthermore, it should be noted that even if the power source controller rather than the power source sensor is used, the power source controller can also perform the same function as the power source sensor, i.e. it can detect and obtain the operation status of the power source 4, and the control unit 1 can subsequently process the operation status data as same as the content above.

In order to further improve the use safety of the cordless magnetic drill, a backup power source 6 which is connected with the control unit 1 can be additionally installed, and the backup power source 6 is used for continuously supplying power to the electromagnetic chuck 5a when the power source 4 is not supplying power to the electromagnetic chuck 5a normally. The control unit 1 can control the power source 4 to supplement power for the backup power source 6, and cut off the connection between the power source 4 and the backup power source 6 when the backup power source 6 is fulls charged. When the energy of the power source 4 is exhausted or the power source 4 is working abnormally, for example, states such as overload, low-voltage, overheating, bad electrical connection and so on occur, or all the power output of the power source 4 is cut off by the power source controller described above and thus the normal holding force of the electromagnetic chuck 5a is influenced, the control unit can control the backup power source 6 to supply power to the electromagnetic chuck 5a, for example, it can actively cut off the connection between the power source 4 and the electromagnetic chuck 5a and simultaneously establish the connection between the backup power source 6 and the electromagnetic chuck 5a to guarantee the normal operation of the electromagnetic chuck 5a; simultaneously, the control unit 1 can also cut off the connection between the power source 4 and the motor 2 in order to protect the power source 4; and/or warn the operator through the man-machine interaction interface. The backup power source 6 can adopt the following power source types: various lithium-based batteries such as lithium-ion batteries, lithium iron phosphate batteries etc; fuel cells; various chemical batteries such as nickel-cadmium batteries, nickel-metal hydride batteries, nickel-zinc batteries etc; and other various mobile power sources.

During the use of the cordless magnetic drill, the electromagnetic chuck 5a sometimes cannot stick well on the working surface because of unclean working surfaces caused by the existence of dust, sand or foreign objects and so on, as a result the cordless magnetic drill may slip off or fall off. In order to avoid this, a magnetic field sensor 7 can be additionally installed in the cordless magnetic drill, wherein the magnetic field sensor 7 is connected with the control unit 1 for detecting and obtaining the operation status of the electromagnetic chuck 5a and transmitting the operation status data to the control unit 1 to be processed, and the control unit 1 can judge according to the operation status data whether the magnetic field of the electromagnetic chuck 5a is normal, i.e. whether the cordless magnetic drill is well held on the working surface. For example, if the magnetic field sensor 7 detects that the magnetic field of the electromagnetic chuck 5a is insufficient to hold the electromagnetic chuck 5a well on the working surface when the cordless magnetic drill is started, the control unit 1 can stop establishing the connection between the power source 4 and the motor 2 to guarantee that the cordless magnetic drill can only work in the state of having been well held on the working surface; and when the magnetic field sensor 7 detects an insufficient magnetic field from the electromagnetic chuck 5a during the use of the cordless magnetic drill, the control unit 1 can also cut off the connection between the power source 4 and the motor 2 in time to prevent the whole cordless magnetic drill from rotating around the bit after the electromagnetic chuck 5a slipped off from the working surface, and/or warn the operator through the man-machine interaction interface.

In order to further ensure that the cordless magnetic drill is reliably fixed on the working surface, the cordless magnetic drill can further comprise a mechanical safety device, which can be in the form of a chain, cord, clamp etc. in order to prevent the cordless magnetic drill from slipping off or falling off by accident.

### Example 1

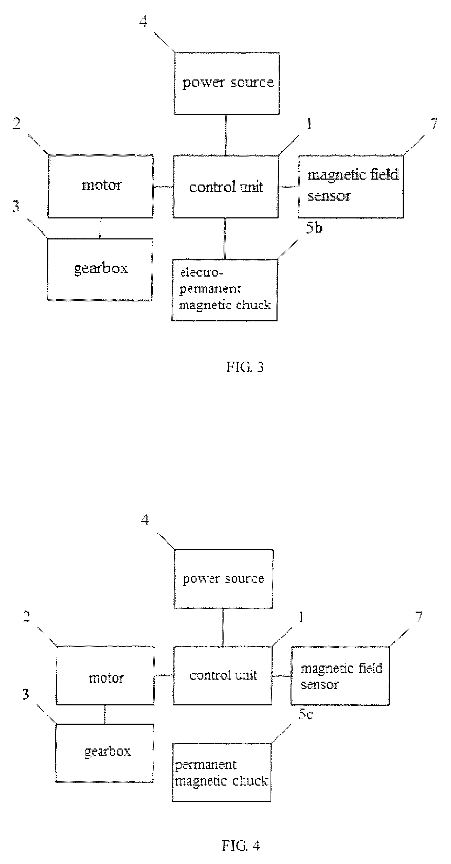

The structure of the cordless magnetic drill in this example is very similar to that in the embodiment 1, and therefore the only difference will be detailed in the following. As shown in Fig. 3, in this example, the magnetic base 5 adopts an electro-permanent magnetic chuck 5b, which does not need to be powered by the power source 4 in normal operation, but only needs an electric turning-on/off signal transmitted from the control unit 1 when the electro-permanent magnetic chuck 5b is turned on and off, for example, the operator can input an instruction for turning on/off the electro-permanent magnetic chuck 5b to the control unit 1 through the man-machine interaction interface, the control unit 1 will then according to the received instruction turn the magnetic field of the electro-permanent magnetic chuck 5b on or off.

As the electro-permanent magnetic chuck 5b can permanently generate the magnetic field without any power, in this embodiment the normal holding force of the electro-permanent magnetic chuck 5b cannot be influenced by any abnormal operation status of the power source 4 such as nearly exhausted energy, or overload, low-voltage, overheating etc, so that the use safety of the cordless magnetic drill can be adequately guaranteed. Correspondingly, for example, the connection between the power source 4 and the motor 2 does not need to be previously cut off for remaining the power for the normal holding force of the electro-permanent magnetic chuck 5b when the energy of the power source 4 is nearly exhausted; the control unit no longer needs to be designed to respond to the abnormal status of the power source 4 before the power source controller responds when the power source controller in the embodiment 1 is adopted; the backup power source 6 described in the embodiment 1 does not need to be additionally installed any more; and the magnetic field sensor 7 is correspondingly used for detecting the status of the magnetic field of the electro-permanent magnetic chuck 5b when the magnetic field sensor 7 described in the embodiment 1 is adopted.

The other modules and their corresponding methods of work in this example are the same as those in the embodiment 1.

### Example 2

The structure of the cordless magnetic drill in this further example is very similar to that in the above example 1, and therefore the only difference will be detailed in the following. As shown in Fig. 4, in this example, the magnetic base 5 adopts a permanent magnetic chuck 5c, which can spontaneously and continuously generate a magnetic field to reliably hold the cordless magnetic drill on the working surface with no need to be powered by the power source 4 or controlled by the control unit 1. When the cordless magnetic drill starts or stops working, sticking the permanent magnetic chuck 5c on the working surface or releasing the permanent magnetic chuck 5c from the working surface can be realized by a simple mechanical structure directly installed on the permanent magnetic chuck 5c, which is well known in the industry, and therefore is not repeatedly detailed herein, or the mechanical control backstage for performing the sticking and the releasing can also be integrated on the man-machine interaction interface, so that the operator can directly control the sticking and the releasing of the permanent magnetic chuck 5c on the man-machine interaction interface.

The permanent magnetic chuck 5c can also continuously generate the magnetic field without any power, and therefore compared with the example 1, the modules and their corresponding methods of work in this example are the same as those in the example 1 except that the detecting object is changed to be the permanent magnetic chuck 5c when the magnetic field sensor 7 is adopted.

### Embodiment 2

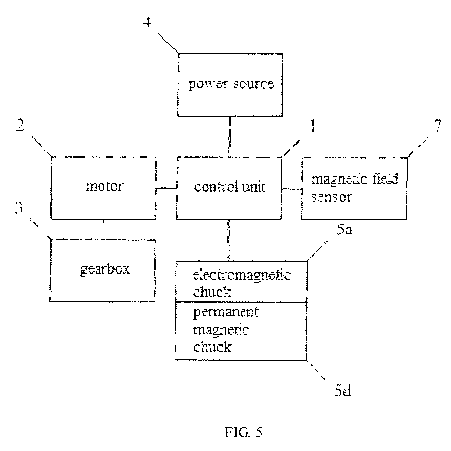

The structure of the cordless magnetic drill in this embodiment is very similar to that in the embodiment 1, and therefore the only difference will be detailed in the following. As shown in Fig. 5, in this embodiment, a permanent magnetic chuck 5d which has a relatively smaller holding force is further additionally adopted on the basis of adopting the electromagnetic chuck 5a described in embodiment 1, and the electromagnetic chuck 5a and the permanent magnetic chuck 5d are jointly used as the magnetic base 5 of the cordless magnetic drill. The chosen permanent magnetic chuck 5d should have a holding force sufficient enough that: the permanent magnetic chuck 5d guarantees that the cordless magnetic drill can still be reliably held on the working surface when the electromagnetic chuck 5a completely loses the magnetic field due to power failure. The control mode of the electromagnetic chuck 5a in this embodiment is the same as that in the embodiment 1, and the control mode of the permanent magnetic chuck 5d in this embodiment is the same as the control mode of the permanent magnetic chuck 5c in the embodiment 3.

As the permanent magnetic chuck 5d can permanently generate the magnetic field without any power, similarly to the example 1, in this embodiment the normal holding force of the permanent magnetic chuck 5d cannot be influenced by any abnormal operation status of the power source 4 such as nearly exhausted energy, or overload, low-voltage, overheating and so on, and thus the use safety of the cordless magnetic drill can be adequately guaranteed. Correspondingly, for example, the connection between the power source 4 and the motor 2 does not need to be previously cut off in order to retain the power for the normal holding force of the permanent magnetic chuck 5d when the energy of the power source 4 is nearly exhausted; the control unit no longer needs to be designed to respond to the abnormal status of the power source 4 before the power source controller responds when the power source controller in the embodiment 1 is adopted; the backup power source 6 described in the embodiment 1 does not need to be additionally installed any more; and the magnetic field sensor 7 is correspondingly used for detecting the status of the superimposed magnetic field of the electromagnetic chuck 5a and the permanent magnetic chuck 5d when the magnetic field sensor 7 described in the embodiment 1 is adopted.

The other modules and their corresponding methods of work in this embodiment are the same as those in the embodiment 1.

Besides the various control functions described above, a variety of auxiliary functions can be added as well to the control unit 1 described in the present invention, such as: the overload protection of the motor 2, the manual adjustment of the rotating speed of the motor 2 for the operator on the man-machine interaction interface, the overheating protection of any module of the cordless magnetic drill, the automatic drilling without any manual operation, the control of the illumination of the cordless magnetic drill etc. All the functions can be realized by the existing hardware conditions in cooperation with the existing programming methods, and the realization method is not repeatedly described herein.

In summary, the cordless magnetic drill of the present invention is no longer limited by the external power source when in use, and as a result, the use safety is improved on the one hand, and convenience of use is also greatly improved on the other hand. The cordless magnetic drill can be used for various highly difficult drilling at any operating location without being influenced by the operating environment, so that work efficiency is improved, and the working procedure is simplified. Furthermore, the present invention further improves the design of the magnetic base of the cordless magnetic drill to guarantee that the cordless magnetic drill can be reliably and firmly held on working surfaces by the magnetic base to prevent unnecessary risk to the operator, so that the use safety of the cordless magnetic drill is further improved to a reliable degree.

## Claims

1. A cordless magnetic drill, comprising:
a control unit (1);
a motor (2) connected with said control unit (1);
a gearbox (3) connected with said motor (2) for regulating the output speed of said motor (2);
an electromagnetic chuck (5a) connected with said control unit (1); and
a portable cordless power source (4) connected with said control unit (1) for supplying power to said motor (2) and to said electromagnetic chuck (5a);
wherein said control unit (1) is arranged to control the operation of said motor (2), said power source (4) and said electromagnetic chuck (5a), and to establish or cut off the connection between said power source (4;6) and said motor (2), and
wherein, when said power source (4) is nearly exhausted, said control unit (1) is arranged to cut off the connection between said power source (4) and said motor (2) and/or warn.

2. The cordless magnetic drill according to claim 1, wherein said control unit (1) is further arranged to reduce the working voltage of said electromagnetic chuck (5a) to the lowest voltage required for holding said cordless magnetic drill on the working surface.

3. The cordless magnetic drill according to claim 1, wherein said cordless magnetic drill further comprises a power source controller connected with said power source (4) for cutting off the power output of said power source (4) when said power source is working abnormally, and a protection module is designed in said control unit (1) with the purpose of cutting off the connection between said power source (4) and said motor (2) before said power source controller responds, and/or warning when said power source is working abnormally.

4. The cordless magnetic drill according to any one of claims 1 to 3, wherein said cordless magnetic drill further comprises a magnetic field sensor (7) connected with said control unit (1) for obtaining the operation status of said electromagnetic chuck (5a) and transmitting said operation status to said control unit (1), and said control unit (1) is arranged to stop establishing the connection between said power source (4;6) and said motor (2) or cut off the connection between said power source (4;6) and said motor (2), and/or warn according to said operation status when the magnetic field of said electromagnetic chuck (5a) is insufficient.

5. The cordless magnetic drill according to claim 1, wherein said cordless magnetic drill further comprises a backup power source (6) connected with said control unit (1) for supplying power to said electromagnetic chuck (5a), and said control unit (1) is arranged to control said backup power source (6) to supply power to said electromagnetic chuck (5a), and/or warn when said power source (4) is working abnormally or its energy is exhausted.

6. The cordless magnetic drill according to claim 5, wherein said control unit (1) is arranged to control said backup power source (6) to supply power to said electromagnetic chuck (5a), cut off the connection between said power source (4) and said motor (2), and/or warn when said power source (4) is working abnormally or its energy is exhausted.

7. The cordless magnetic drill according to claim 5, wherein the power of said backup power source (6) is supplemented by said power source (4) through the control of said control unit (1).

8. The cordless magnetic drill according to claim 1, comprising:
a permanent magnetic chuck (5d), and
a magnetic field sensor (7) connected with said control unit (1) for obtaining the operation status of said permanent magnetic chuck (5d) and said electromagnetic chuck (5a) and transmitting said operation status to said control unit (1), and said control unit (1) is arranged to stop establishing the connection between said power source (4) and said motor (2) or cut off the connection between said power source (4) and said motor (2), and/or warn according to said operation status when the superposed magnetic field of said permanent magnetic chuck (5d) and said electromagnetic chuck (5a) is insufficient.

9. The cordless magnetic drill according to claim 8, further comprising a power source controller connected with said power source (4) for cutting off the power output of said power source (4) when said power source is working abnormally.

10. The cordless magnetic drill according to claim 1 or 8, wherein said cordless magnetic drill further comprises a power source sensor connected with said power source (4) and said control unit (1) to obtain the operation status of said power source (4) and transmit said operation status to said control unit (1), and said control unit (1) is arranged to cut off the connection between said power source (4) and said motor (2), and/or warn according to said operation status when said power source (4) is working abnormally.

11. The cordless magnetic drill according to claim 1 or 8, wherein said cordless magnetic drill further comprises a power source controller connected with said power source (4) and said control unit (1) for obtaining the operation status of said power source (4) and transmitting said operation status to said control unit (1), and said control unit (1) is arranged to cut off the connection between said power source (4) and said motor (2), and/or warn according to said operation status when said power source (4) is working abnormally.

12. The cordless magnetic drill according to claim 1 or 8, further comprising a mechanical safety device used for fixing said cordless magnetic drill on a working surface.

13. The cordless magnetic drill according to any one of the preceding claims, wherein said power source (4) is preferably one of the following power sources or a combination of at least two of the following power sources: lithium based batteries, nickel-cadmium batteries, nickel-metal hydride batteries, nickel-zinc batteries or fuel cells.

## Patentansprüche

1. Eine schnurlose magnetische Bohrmaschine, umfassend:
eine Steuereinheit (1),
einen Motor (2), der mit der Steuereinheit (1) verbunden ist,
ein Getriebe (3), das mit dem Motor (2) zum Regulieren der Ausgabegeschwindigkeit des Motors (2) verbunden ist,
eine elektromagnetische Spannvorrichtung (5a), die mit der Steuereinheit (1) verbunden ist, und
eine mit der Steuereinheit (1) verbundene transportable schnurlose Energiequelle (4) zur Versorgung des Motors (2) und der elektromagnetischen Spannvorrichtung (5a) mit Energie;
wobei die Steuereinheit (1) ausgestaltet ist, um den Betrieb des Motors (2), der Energiequelle (4), und der elektromagnetischen Spannvorrichtung (5a) zu steuern, und um die Verbindung zwischen der Energiequelle (4;6) und dem Motor (2) herzustellen oder zu trennen, und
wobei, wenn die Energiequelle (4) nahezu erschöpft ist, ist die Steuereinheit (1) ausgestaltet ist, um die Verbindung zwischen der Energiequelle (4) und dem Motor (2) zu trennen und/oder zu warnen.

2. Die schnurlose magnetische Bohrmaschine gemäß Anspruch 1, wobei die Steuereinheit (1) ferner ausgestaltet ist, um die Arbeitsspannung der elektromagnetischen Spannvorrichtung (5a) auf die niedrigste Spannung, die zum Halten der elektromagnetischen Bohrmaschine an oder auf der Arbeitsoberfläche nötig ist, zu reduzieren.

3. Die schnurlose magnetische Bohrmaschine gemäß Anspruch 1, wobei die schnurlose magnetische Bohrmaschine ferner eine mit der Energiequelle (4) verbundene Energiequellensteuerung zum Trennen der Energieausgabe der Energiequelle (4), wenn die Energiequelle abnormal arbeitet, umfasst, und ein Schutzmodul für den Zweck des Trennens der Verbindung zwischen der Energiequelle (4) und dem Motor (2), bevor die Energiequellensteuerung anspricht, und/oder des Warnens, wenn die Energiequelle abnormal arbeitet, in der Steuereinheit (1) ausgebildet ist.

4. Die schnurlose magnetische Bohrmaschine gemäß einem der Ansprüche 1 bis 3, wobei die schnurlose Bohrmaschine ferner einen mit der Steuereinheit (1) verbundenen Magnetfeldsensor (7) zum Erlangen des Betriebsstatus der elektromagnetischen Spannvorrichtung (5a) und zum Übermitteln des Betriebsstatus zu der Steuereinheit (1) umfasst, und die Steuereinheit (1) ausgestaltet ist, um das Herstellen der Verbindung zwischen der Energiequelle (4;6) und dem Motor (2) zu stoppen, oder um die Verbindung zwischen der Energiequelle (4;6) und dem Motor (2) zu trennen, und/oder um gemäß dem Betriebsstatus zu warnen, wenn das magnetische Feld der elektromagnetischen Spannvorrichtung (5a) unzureichend ist.

5. Die schnurlose magnetische Bohrmaschine gemäß Anspruch 1, wobei die schnurlose magnetische Bohrmaschine ferner eine mit der Steuereinheit (1) verbundene Backup-Energiequelle (6) zur Versorgung der elektromagnetischen Spannvorrichtung (5a) mit Energie umfasst, und die Steuereinheit (1) ausgestaltet ist, um die Backup-Energiequelle (6), zu steuern um die elektromagnetische Spannvorrichtung (5a) mit Energie zu versorgen, und/oder zu warnen, wenn die Energiequelle (4) abnormal arbeitet oder ihre Energie erschöpft ist.

6. Die schnurlose magnetische Bohrmaschine gemäß Anspruch 5, wobei die Steuereinheit (1) ausgestaltet ist, um die Backup-Energiequelle (6) zu steuern, um die elektromagnetische Spannvorrichtung (5a) mit.Energie zu versorgen, um die Verbindung zwischen der Energiequelle (4) und dem Motor (2) zu trennen, und/oder um zu warnen, wenn die Energiequelle (4) abnormal arbeitet oder ihre Energie erschöpft ist.

7. Die schnurlose magnetische Bohrmaschine gemäß Anspruch 5, wobei die Energie der Backup-Energiequelle (6) durch die Energiequelle (4), über die Steuerung der Steuereinheit (1) ergänzt wird.

8. Die schnurlose magnetische Bohrmaschine gemäß Anspruch 1 umfassend:
eine permanentmagnetische Spannvorrichtung (5d), und
einen mit der Steuereinheit (1) verbundenen Magnetfeldsensor (7) zum Erlangung des Betriebsstatus der permanentmagnetischen Spannvorrichtung (5d) und der elektromagnetischen Spannvorrichtung (5a) und zum Übertragen des Betriebsstatus zu der Steuereinheit (1), und wobei die Steuereinheit (1) ausgestaltet ist, um das Herstellen der Verbindung zwischen der Energiequelle (4) und dem Motor (2) zu stoppen oder um die Verbindung zwischen der Energiequelle (4) und dem Motor (2) zu trennen, und/oder um gemäß dem Betriebsstatus zu warnen, wenn das sich überlagernde magnetische Feld der permanentmagnetischen Spannvorrichtung (5d) und der elektromagnetischen Spannvorrichtung (5a) unzureichend ist.

9. Die schnurlose magnetische Bohrmaschine gemäß Anspruch 8, ferner mit einer mit der Energiequelle (4) verbundenen Energiequellensteuerung zum Trennen der Energieausgabe der Energiequelle (4), wenn die Energiequelle abnormal arbeitet.

10. Die schnurlose magnetische Bohrmaschine gemäß Anspruch 1 oder 8, wobei die schnurlose magnetische Bohrmaschine ferner einen mit der Energiequelle (4) und der Steuereinheit (1) verbundenen Energiequellensensor zum Erlangen des Betriebsstatus der Energiequelle (4) und zum Übermitteln des Betriebsstatus zu der Steuereinheit (1), und wobei die Steuereinheit (1) ausgestaltet ist, um die Verbindung zwischen der Energiequelle (4) und dem Motor (2) zu trennen, und/oder um gemäß dem Betriebsstatus zu warnen, wenn die Energiequelle (4) abnormal arbeitet.

11. Die schnurlose magnetische Bohrmaschine gemäß Anspruch 1 oder 8, wobei die schnurlose magnetische Bohrmaschine ferner eine mit der Energiequelle (4) und der Steuereinheit (1) verbundene Energiequellensteuerung zum Erlangen des Betriebsstatus der Energiequelle (4) und zum Übermitteln des Betriebsstatus zu der Steuereinheit (1) aufweist, und die Steuereinheit (1) ausgestaltet ist, um die Verbindung zwischen der Energiequelle (4) und dem Motor (2) zu trennen, und/oder um gemäß dem Betriebsstatus zu warnen, wenn die die Energiequelle (4) abnormal arbeitet.

12. Die schnurlose magnetische Bohrmaschine gemäß Anspruch 1 oder 8, ferner mit einer mechanischen Sicherheitsvorrichtung, die verwendet wird, um die schnurlose magnetische Bohrmaschine an oder auf einer Arbeitsoberfläche zu befestigen.

13. Die schnurlose magnetische Bohrmaschine gemäß einem der vorstehenden Ansprüche, wobei die Energiequelle (4) vorzugsweise eine der folgenden Energiequellen oder eine Kombination von mindestens 2 der folgenden Energiequellen ist: Lithium-basierte Batterien, Nickel-Cadmium Batterien, Nickel-Metallhydrid Batterien, Nickel-Zink Batterien oder Brennstoffzellen.

## Revendications

1. Perceuse magnétique sans fil, comprenant :
une unité (1) de commande;
un moteur (2) relié à l'unité (1) de commande;
une boîte de vitesse (3) reliée au moteur (2) pour réguler la vitesse de sortie du moteur (2);
un mandrin (5a) électromagnétique relié à l'unité (1) de commande et
une source (4) de courant portative, sans fil, reliée à l'unité (1) de commande pour fournir du courant au moteur (2) et au mandrin (5a) électromagnétique;
dans laquelle l'unité (1) de commande est agencée pour commander le fonctionnement du moteur (2), de la source (4) de courant et du mandrin (5a) électromagnétique et pour établir ou interrompre la liaison entre la source (4; 6) de courant et le moteur (2) et
dans laquelle, lorsque la source (4) de courant est presque épuisée,
l'unité (1) de commande est agencée pour couper la liaison entre la source (4) de courant et le moteur (2) et/ou pour alerter.

2. Perceuse magnétique sans fil suivant la revendication 1, dans laquelle l'unité (1) de commande est agencée, en outre, pour réduire la tension de travail du mandrin (5a) électromagnétique à la tension la plus basse requise pour maintenir la perceuse magnétique sans fil sur la surface de travail.

3. Perceuse magnétique sans fil suivant la revendication 1, dans laquelle la perceuse magnétique sans fil comprend, en outre, une unité de commande de la source de courant reliée à la source (4) de courant pour couper la sortie de courant de la source (4) de courant lorsque la source de courant travaille anormalement et un module de protection est mis dans l'unité (1) de commande dans le but de couper la liaison entre la source (4) de courant et le moteur (2) avant que l'unité de commande de la source de courant réagisse et/ou pour alerter lorsque la source de courant travaille anormalement.

4. Perceuse magnétique sans fil suivant l'une quelconque des revendications 1 à 3, dans laquelle la perceuse magnétique sans fil comprend, en outre, un capteur (7) du champ magnétique relié à l'unité (1) de commande pour obtenir l'état de fonctionnement du mandrin (5a) électromagnétique et pour transmettre cet état de fonctionnement à l'unité (1) de commande et l'unité (1) de commande est agencée pour faire cesser l'établissement de la liaison entre la source (4; 6) de courant et le moteur (2) ou pour couper la liaison entre la source (4; 6) de courant et le moteur, et/ou pour alerter en fonction de l'état de fonctionnement lorsque le champ magnétique du mandrin (5a) électromagnétique est insuffisant.

5. Perceuse magnétique sans fil suivant la revendication 1, dans laquelle la perceuse magnétique sans fil comprend, en outre, une source (6) de courant de secours reliée à l'unité (1) de commande pour fournir du courant au mandrin (5a) électromagnétique et l'unité (1) de commande est agencée pour commander la source (6) de courant de secours pour fournir du courant au mandrin (5a) électromagnétique et/ou pour alerter lorsque la source (4) de courant travaille anormalement ou lorsqu'elle est épuisée.

6. Perceuse magnétique sans fil suivant la revendication 5, dans laquelle l'unité (1) de commande est agencée pour commander la source (6) de courant de secours pour fournir du courant au mandrin (5a) électromagnétique, pour couper la liaison entre la source (4) de courant et le moteur (2) et/ou pour alerter lorsque la source (4) de courant travaille anormalement ou lorsqu'elle est épuisée.

7. Perceuse magnétique sans fil suivant la revendication 5, dans laquelle le courant de la source (6) de courant de secours est supplémenté par la source (4) de courant, par l'intermédiaire de la commande de l'unité (1) de commande.

8. Perceuse magnétique sans fil suivant la revendication 1, comprenant :
un mandrin (5d) à magnétisme permanent et
un capteur (7) du champ magnétique relié à l'unité (1) de commande pour obtenir l'état de fonctionnement du mandrin (5d) à magnétisme permanent et du mandrin (5a) électromagnétique et transmettre cet état de fonctionnement à l'unité (1) de commande et l'unité (1) de commande est agencée pour mettre fin à la liaison entre la source (4) de courant et le moteur (2) ou pour couper la liaison entre la source (4) de courant et le moteur (2) et/ou pour alerter en fonction de l'état de fonctionnement lorsque le champ magnétique superposé du mandrin (5d) à magnétisme permanent et du mandrin (5a) électromagnétique est insuffisant.

9. Perceuse magnétique sans fil suivant la revendication 8, comprenant, en outre, une unité de commande de la source de courant reliée à la source (4) de courant pour couper la sortie du courant de la source (4) de courant lorsque la source de courant travaille anormalement.

10. Perceuse magnétique sans fil suivant la revendication 1 ou 8, dans laquelle la perceuse magnétique sans fil comprend, en outre, un capteur de source de courant relié à la source (4) de courant et l'unité (1) de commande pour obtenir l'état de fonctionnement de la source (4) de courant et transmettre cet état de fonctionnement à l'unité (1) de commande et l'unité (1) de commande est agencée pour couper la liaison entre la source (4) de courant et le moteur (2) et/ou pour alerter en fonction de l'état de fonctionnement lorsque la source (4) de courant travaille anormalement.

11. Perceuse magnétique sans fil suivant la revendication 1 ou 8, dans laquelle la perceuse magnétique sans fil comprend, en outre, une unité de commande de la source de courant reliée à la source (4) de courant et à l'unité (1) de commande pour obtenir l'état de fonctionnement de la source (4) de courant et transmettre l'état de fonctionnement à l'unité (1) de commande et l'unité (1) de commande est agencée pour couper la liaison entre la source (4) de courant et le moteur (2) et/ou pour alerter en fonction de l'état de fonctionnement lorsque la source (4) de courant travaille anormalement.

12. Perceuse magnétique sans fil suivant la revendication 1 ou 8, comprenant, en outre, un dispositif mécanique de sécurité utilisé pour fixer la perceuse magnétique sans fil à une surface de travail.

13. Perceuse magnétique sans fil suivant l'une quelconque des revendications précédentes, dans laquelle la source (4) de courant est, de préférence, l'une des sources de courant suivantes ou une combinaison d'au moins deux des sources de courant suivantes: des batteries au lithium, des batteries nickel-cadmium, des batteries nickel-hydrure métallique, des batteries nickel-zinc ou des piles à combustible.
